# EUROPÄISCHE PATENTSCHRIFT

(11) **EP 1 666 836 B1**
(45) Veröffentlichungstag und Bekanntmachung des Hinweises auf die Patenterteilung: **11.03.2009**
(21) Anmeldenummer: 05025189.1
(22) Anmeldetag: 18.11.2005
(51) Int. Cl.: G01B 7/30, G01L 3/10, G01D 5/12

(54) **Drehmomentsensor und Drehsensor**
Torque sensor and rotation detector
Capteur de couple et capteur de rotation

(30) Priorität: 19.11.2004 DE 102004056049
(43) Veröffentlichungstag der Anmeldung: 07.06.2006
(73) Patentinhaber: AB Elektronik GmbH, 59368 Werne (DE)
(72) Erfinder: Rühl, Stefan, 44534 Lünen (DE); Fallak, Klaus, 59368 Werne (DE)
(74) Vertreter: Wenzel & Kalkoff

(56) Entgegenhaltungen:
- WO-A-02/16879

## Beschreibung

Die Erfindung betrifft einen Drehmomentsensor.

Unter einem Drehsensor wird ein Sensor verstanden, der eine relative Drehposition zweier gegeneinander drehbarer Elemente, nämlich eines Stators und eines Rotors ermitteln kann. Drehsensoren werden in verschiedenen Bereichen der Technik zum Ermitteln von Drehpositionen für verschiedene Steuer- und Regelungsanwendungen eingesetzt.

Unter einem Drehmomentsensor wird ein Sensor verstanden, der das Drehmoment in einer Welle ermittelt. Drehmomentsensoren werden ebenfalls in einer Vielzahl von Steuer- und Regelungsanwendungen eingesetzt. Eine spezielle Anwendung von Drehmomentsensoren ist die Ermittlung des Drehmoments einer Lenkwelle zur Ansteuerung einer ServoUnterstützung (Servo-Lenkung).

Von Funktion und Aufbau her hängen Drehsensoren und Drehmomentsensoren dadurch zusammen, daß bei Drehmomentsensoren zwei gekoppelte Wellenteile unter dem Einfluß des zu ermittelnden Drehmoments gegeneinander verdrehbar sind, und die hierdurch bewirkte Verdrehung durch Drehsensoren gemessen werden kann.

In der DE-A-197 45 823 ist eine Vorrichtung zum Messen von Drehmoment und Drehwinkel einer Welle beschrieben. An zwei axial voneinander entfernten Stellen der Welle sind Scheibenelemente angebracht. Deren Drehstellung kann optisch, elektromagnetisch, kapazitiv oder mechanisch bestimmt werden. Die Wellenteile sind hierbei über einen Torsionsstab miteinander verbunden, der eine vorbestimmte Tordierbarkeit aufweist, so daß sich die Wellenteile bei einem vorbestimmten von der Welle übertragenen Drehmoment gegeneinander um einen vorbestimmten Winkel verdrehen. Die entsprechende relative Verdrehung der Scheibenelemente wird ermittelt und so das Drehmoment bestimmt.

Die WO-A-98/48244 zeigt einen Drehsensor und Drehmomentsensor, bei dem die Erfassung der Winkelstellung mittels eines Halleffekt-Sensors erfolgt. An einer Welle sind Magnete angeordnet, während in einem Statorelement zwischen Flußleitstücken Luftspalte gebildet sind. Der magnetische Fluß in den Luftspalten wird mittels Hall-ICs gemessen und daraus die Drehposition des Magnetelements bestimmt. Aus den jeweiligen Werten der Drehposition an axial im Abstand angeordneten Stellen kann die Torsion und so das übertragene Drehmoment berechnet werden.

In der DE-A-42 31 646 ist eine Meßanordnung zur Bestimmung der Torsion sowie eines Drehmomentes einer Welle beschrieben. Auf der Welle sind an axial im Abstand befindlichen Positionen ringförmige Körper aus weichmagnetischem Material angebracht, die sich bei Torsion gegeneinander verdrehen. Die Körper weisen eine rotationssymmetrische Anordnung mit Erhebungen und Lücken auf. In einem Statorteil sind mehrere Spulen vorgesehen, mit denen ein elektromagnetisches Wechselfeld erzeugt wird. Durch Übereinstimmung der Erhebungen bzw. bei Torsion Verstellung der Erhebungen zueinander ergibt sich eine meßbare Veränderung der Induktivität des Magnetkreises, aus der ein Meßwert für die Torsion ermittelt wird.

In der DE-A-4232993 ist eine Vorrichtung zur Messung der Torsion und/oder relativen Winkelbewegung einer Wellenkonfiguration dargestellt. Auf der zu messenden Wellenkonfiguration sind als Rotor zwei Spulenanordnungen mit einem dazwischen befindlichen Luftspalt angebracht. Statorseitig ist eine Spulenringanordnung vorgesehen. Bei den Spulenanordnungen handelt es sich um relativ komplexe räumliche Gebilde, bei denen Ringsegmente aus ferritgefülltem Material mit Spulendraht umwickelt sind. Eine Torsion der Wellenkonfiguration äußert sich in einer Verstellung der Spulenanordnungen zueinander, die bei Stromdurchfluß zur Zunahme oder Abnahme eines elektrischen Feldes in den Spulenanordnungen führt. Diese elektrischen Signale werden in die Spulenringanordnung des Stators übertragen und die sich ergebenden Meßkurven ausgewertet.

Die WO 02/16879 offenbart einen Drehmoment/Drehwinkelsensor mit zwei Coderädern und einem zwischengeschalteten Torsionselement, wie er beispielsweise bei einer Lenkwelle eines Kraftfahrzeugs Verwendung findet. Jedes Coderad weist zwei Codespuren auf, die ringförmig um die Welle angeordnet sind. Jede Codespur weist Markierungen auf, die im Fall der magnetischen Kodierung als Nord- und Südpol ausgebildet sind. In einer alternativen Ausführungsform sind auch optische Markierungen verwendbar. Jeder Codespur sind magnetfeldmessende Sensorelemente zugeordnet. Bei Drehung der Welle erfassen sie die Magnetfelder der Codespuren und liefern phasenverschobene Sinus- und Cosinuswerte, aus denen eine Auswerteeinheit an Drehwinkel ermittelt. Aus einem Differenzwinkel lässt sich das Drehmoment bestimmen.

Bei den verschiedenen Lösungen für Drehsensoren und Drehmomentsensoren besteht der Nachteil, daß jeweils Rotor- und Statorbauteile sehr exakt gefertigt und angebracht werden müssen. Bei magnetischen Sensoren ist die Breite des Luftspaltes eine entscheidende Größe, so daß ein exakter Wert genau eingehalten werden muß. Darüber hinaus ergeben sich weitere fertigungstechnische Anforderungen wie die maßgenaue Herstellung von komplex geformten Metallkörpern und von gewickelten Spulen, so daß sich insgesamt hohe Kosten für die bekannten Sensoren ergeben. Insbesondere bei Drehmomentsensoren sind die Herstellungskosten hoch, da hier im Vergleich zu Drehsensoren der konstruktive Aufwand verdoppelt ist.

Es ist Aufgabe der Erfindung einen Drehmomentsensor anzugeben, bei dem eine besonders kostengünstige Herstellung möglich ist.

Diese Aufgabe wird gelöst durch einen induktiven Drehmomentsensor nach Anspruch 1. Abhängige Ansprüche beziehen sich auf vorteilhafte Ausführungsformen der Erfindung.

Der erfindungsgemäße induktive Sensor weist ein Statorelement und zwei Rotorelemente auf, die um eine Drehachse gegenüber dem Statorelement drehbar sind.

Hierbei ist am Statorelement ein Spulenschaltkreis mit mindestens zwei Spulen vorgesehen, die sich entlang eines Sensorbereiches erstrecken. Am Rotorelement ist ein induktives Kopplungselement vorgesehen. Erfindungsgemäß sind die induktiven Kopplungselemente Resonanzkreise jeweils mit einer Kapazität und einer Induktivität, wie in der WO-A-03/038379 beschrieben. Bei Drehung der Elemente gegeneinander bewegt sich das induktive Kopplungselement entlang der Spulen und bewirkt eine positionsabhängige induktive Kopplung zwischen den Spulen. Diese Kopplung ist leicht meßbar, indem in einer der Spulen ein Erregersignal erzeugt und das Empfängersignal aus einer zweiten Spule ausgewertet wird. Da das induktive Kopplungselement keine Anschlüsse erfordert, ist so der Aufbau besonders einfach, da eine umständliche Kontaktierung bspw. über Schleifringe entfällt.

Erfindungsgemäß weist der Drehmomentsensor mindestens zwei drehbare Rotorelemente auf, die axial im Abstand an Wellenstücken einer Welle gegenüber dem Statorelement um eine gemeinsame Drehachse drehbar angeordnet sind. Jeweils am Sensorbereich der Rotorelemente ist ein induktives Kopplungselement vorgesehen. Hierbei weisen die induktiven Kopplungselemente der beiden Rotorelemente unterscheidbare induktive Kopplungseigenschaften auf. Sie sind jeweils als Resonanzkreis aufgebaut und unterscheiden sich durch unterschiedliche Resonanzfrequenzen. Hierbei weisen die Elemente bevorzugt eine im wesentlichen identische induktive Spulenstruktur auf, sind aber mit unterschiedlichen Kapazitäten bestückt.

Erfindungsgemäß ist der Spulenschaltkreis so angeordnet, daß er mit den induktiven Kopplungselementen beider Rotorelemente in Überdeckung steht.

Der erfindungsgemäße induktive Drehmomentsensor ist somit besonders einfach aufgebaut. Mit einem einzigen Sensor kann die absolute und relative Drehposition der beiden Rotorelemente ermittelt werden. So wird der bauliche Aufwand und die Anzahl benötigter Teile erheblich reduziert und der Sensor kann extrem kostengünstig hergestellt werden.

Bei dem Sensor mit zwei Rotorelementen ist bevorzugt eine solche Auswerteschaltung angeschlossen, die mittels eines Erregersignals in einer der Spulen und Verarbeitung eines Empfängersignals aus mindestens einer weiteren Spule jeweils Werte für die Drehposition des ersten und zweiten Rotorelements ermittelt.

Für die Lieferung eines Sensorsignals für das Drehmoment sind bevorzugt die beiden Rotorelemente jeweils an fluchtenden, elastisch gegeneinander verdrehbaren Wellenstücken angeordnet. Aus der Differenz der Drehpositionen der Rotorelemente kann so ein Wert für das Drehmoment ermittelt werden.

Entsprechend einer bevorzugten Weiterbildung der Erfindung weist der Spulenschaltkreis ein flexibles Trägermaterial auf. Die Spulen sind als Leiter an oder auf diesem Trägermaterial gebildet, bspw. als Leiterbahnen, die auf dem oder in dem Trägermaterial verlaufen oder als Leitungsdrähte, die mit dem Trägermaterial verbunden oder in diesem eingebettet sind. Das flexible Trägermaterial, bei dem es sich bevorzugt um ein Kunststoff-Material handelt, verläuft gekrümmt entlang des Sensorbereiches. Bevorzugt ist das Trägermaterial flach, z. B. in Form eines flächigen Trägerstreifens. Ein solches flaches Trägermaterial ist bevorzugt quer zur Fläche gekrümmt. Das Trägermaterial kann aus einem Material bestehen, das ausreichend dünn ist um in einem Radius von 10 cm oder weniger gebogen zu werden, bevorzugt 5 cm oder weniger. Die Biegsamkeit kann aber auch auf andere Weise erzielt werden, bspw. durch eine segmentartige Struktur mit Biege- oder Knickstellen.

Ein solcher Sensor kann als Torsions- oder Drehmomentsensor verwendet werden, wobei die relative Drehposition von zwei Rotorelementen und einem Statorelement ermittelt und entsprechend ausgewertet wird. Bei geeigneter Auswertung liefert der Sensor sowohl die absolute Drehposition der Elemente (und daraus durch geeignete Verarbeitung ableitbar Größen wie Drehgeschwindigkeit oder Anzahl Umdrehungen) als auch die relative Drehposition zweier Elemente zueinander mit hoher Präzision.

Auch das induktive Kopplungselement kann eine Leiterstruktur auf einem flexiblen Trägermaterial aufweisen.

Ein derartiger Sensor ist dabei von der Konstruktion besonders einfach und damit kostengünstig herzustellen. Der Spulenschaltkreis und/oder das induktive Koppelelement auf einem flexiblen Trägermaterial kann auf einfache Weise besonders kostengünstig hergestellt werden, bspw. mit Hilfe einer Drucktechnik oder herkömmlicher Leiterplatten-Ätztechnik. Die flach ausgeführten Spulen sind erheblich einfacher herzustellen als gewickelte Spulen, speziell wenn die Wicklungen um die Welle herum angeordnet werden müssen. Sämtliche Trägerteile können bevorzugt aus Kunststoff hergestellt werden, so daß sie in großen Mengen kostengünstig produziert werden können. Bei geeigneter Auswertung ist auch die maßhaltige Anbringung der drehend zueinander angeordneten Elemente nicht kritisch, so daß auch bei höheren Fertigungstoleranzen exakte Meßwerterfassungen möglich sind.

Der Spulenschaltkreis und/oder das induktive Koppelelement kann in einem flachen Zustand des Trägermaterials hergestellt und das Trägermaterial dann in einem flexiblen Zustand so am zweiten Element angebracht, dass es gekrümmt entlang des Sensorbereichs verläuft. So kann auf besonders kostengünstige Weise die benötigte räumliche Struktur (gekrümmter Verlauf entlang des Sensorbereiches) erzeugt werden, wobei z.B. herkömmliche Leiterbahn-Techniken zur Erstellung von Spulenstrukturen auf flachem Trägermaterial verwendet werden können. Es sei hierbei darauf hingewiesen, dass das flexible Trägermaterial nicht zwangsläufig auch im späteren Betrieb des Sensors noch flexibel sein muss, sondern dass es ebenso möglich ist, dass das Trägermaterial in der gekrümmten Form fixiert wird, bspw. aushärtet. Es ist sogar möglich, dass ein an sich steifes Trägermaterial nur für den Schritt des Anbringens am zweiten Element flexibel gemacht wird, bspw. durch Wärmeeinwirkung. Besonders bevorzugt wird, daß das flexible Trägermaterial in einem Spritzgußverfahren in Kunststoff eingebettet und so an Stator bzw. Rotor fixiert wird.

Das flexible Trägermaterial eines Spulenschaltkreises und/oder des Koppelelements ist bevorzugt im wesentlichen ringförmig, mindestens teilringförmig gekrümmt. Beispielsweise kann es mindestens einen Viertel- oder Halbkreis umfassen. Besonders bevorzugt umschließt es im wesentlichen das erste Element. Hierbei wird unter "im wesentlichen" verstanden, daß zwar bevorzugt ein Vollkreis in 360° abgedeckt wird, aber Bereiche bspw. für elektrische Bauteile freibleiben können.

Für eine gute Meßwerterfassung sollten Rotor- und Statorelement mindestens teilweise in Überdeckung sein, d. h. daß sich das induktive Kopplungselement in Reichweite des Spulenschaltkreises bewegt. Bevorzugt ist der Sensorbereich des Statorelements hierbei radial neben dem induktiven Kopplungselement angeordnet.

Bevorzugt ist das Statorelement ein feststehendes Ringelement, das mindestens teilweise radial um das Rotorelement herum angeordnet ist, bevorzugt es im wesentlichen umschließt. Das Rotorelement ist drehbar, bevorzugt auf einer Welle, angeordnet. Der Sensorbereich des Rotorelements ist bevorzugt mindestens teilweise als Zylinderfläche ausgebildet. Bevorzugt weist das Ringelement einen Aufnahmebereich auf, in dem das flexible Trägermaterial aufgenommen ist.

Gemäß einer Weiterbildung ist an dem Spulenschaltkreis eine Auswerteschaltung angeschlossen. Diese kann am Statorelement vorgesehen sein. Bevorzugt ist die Auswerteschaltung direkt auf dem flexiblen Trägermaterial oder mit diesem unmittelbar verbunden angebracht. Die Auswerteschaltung ist ihrerseits bevorzugt durch einen Steckeranschluß am Statorelement kontaktiert. Hierüber kann einerseits eine erforderliche Betriebsspannung geliefert werden, andererseits kann das Sensorsignal als elektrisches Signal in digitaler (z. B. als PWM-Signal oder digitales Bus-Signal) oder analoger Form (z. B. als Spannungssignal) abgefragt werden, bspw. zur Verarbeitung in einer Steuereinheit.

Die Auswerteschaltung erzeugt in einer der Spulen ein Erregersignal und wertet ein Empfängersignal, das durch Überkopplung aus der ersten Spule in einer weiteren Spule erzeugt wird, aus. Durch die positionsabhängige Überkopplung über das induktive Kopplungselement kann so dessen Position und damit die Drehposition ermittelt werden. Für derartige induktive Sensoren sind verschiedenen Funktionsweisen bekannt, wobei bevorzugt entweder mehrere Erregerspulen oder mehrere Empfängerspulen verwendet werden. Besonders bevorzugt wird ein Sensor, wie er in der WO-A-03/038379 beschrieben ist. Hierbei ist das induktive Kopplungselement als Resonanzkreis mit einer Kapazität und einer Induktivität ausgebildet. Bei Betrieb der Erregerspulen mit einem Wechselspannungssignal im Bereich der Resonanzfrequenz wird so durch die Resonanzüberhöhung ein relativ starkes Ausgangssignal an der Empfängerspule erzeugt, so daß auch vergrößerte Abstände zwischen dem induktiven Kopplungselement und dem Spulenschaltkreis noch brauchbare Signale liefern.

Bevorzugt sind das erste und zweite Element von einem Gehäuse im wesentlichen umgeben und so vor äußeren Einflüssen geschützt. Das Gehäuse ist bevorzugt mit dem zweiten Element verbunden oder sogar einstückig mit diesem ausgebildet.

Nachfolgend werden Ausführungsformen der Erfindung anhand der Zeichnungen näher beschrieben. Hierbei zeigen:
- Fig. 1: eine perspektivische Ansicht, teilweise im Aufriß, einer ersten Ausführungsform eines Sensors;
- Fig. 2: eine Querschnittsansicht des Sensors aus Fig. 1;
- Fig. 3: eine Seitenansicht eines Rotorelements des Sensors aus Fig. 1;
- Fig. 4: eine Frontansicht des Rotorelements aus Fig. 3;
- Fig. 5a: eine Draufsicht auf ein induktives Kopplungselement des Rotorelements aus Fig. 3, 4;
- Fig. 5b: eine Seitenansicht des induktiven Kopplungselements aus Fig. 5a;
- Fig. 6: eine Frontansicht eines Statorelements des Sensors aus Fig. 1;
- Fig. 7: eine Seitenansicht des Statorelements aus Fig. 6;
- Fig. 8: eine Draufsicht auf einen Spulenschaltkreis des Statorelements aus Fig. 7;
- Fig. 9: eine Seitenansicht des Spulenschaltkreises aus Fig. 8;
- Fig. 10: in perspektivischer Ansicht eine Explosionszeichnung einer zweiten Ausführungsform eines Sensors;
- Fig. 11: im Längsschnitt eine Explosionszeichnung von Elementen des Sensors aus Fig. 10;
- Fig. 12: eine Seitenansicht im Längsschnitt des Sensors aus Fig. 10.
- Fig. 13: eine Seitenansicht eines alternativen flexiblen Trägerstreifens in flacher Form;
- Fig. 14: eine Seitenansicht des alternativen flexiblen Trägerstreifens aus Fig. 13 in gekrümmter Form;
- Fig. 15: eine perspektivische Ansicht einer Explosionsdarstellung eines Rotorelements gemäß einer dritten Ausführungsform;
- Fig. 16: eine Querschnittsansicht des Rotorelements aus Fig. 15;
- Fig. 17: eine perspektivische Ansicht von zwei Rotorelementen des Typs aus Fig. 15, Fig. 16;
- Fig. 18: eine perspektivische Ansicht einer Explosionsdarstellung eines Statorelements gemäß einer dritten Ausführungsform;
- Fig. 19: eine perspektivische Ansicht des Statorelements aus Fig. 18;
- Fig. 20: eine Querschnittsansicht des Statorelements aus Fig. 18, Fig. 19;
- Fig. 21: eine perspektivische Ansicht einer Explosionsdarstellung eines Drehmomentsensors gemäß einer dritten Ausführungsform;
- Fig. 22: eine perspektivische Ansicht des Drehmomentsensors aus Fig. 21.

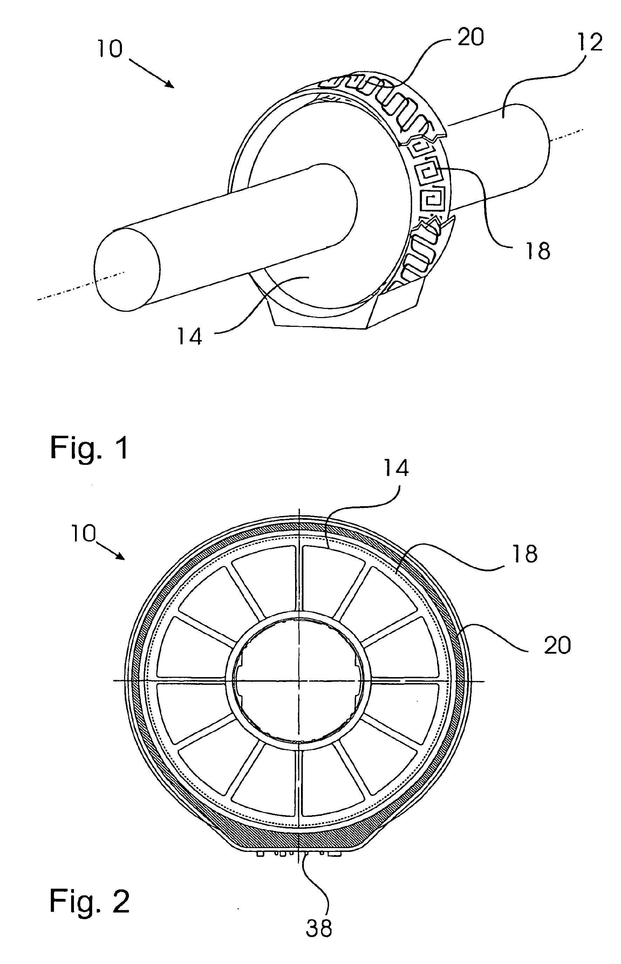

In Fig. 1 ist ein Drehsensor entsprechend einer ersten Ausführungsform gezeigt. Auf einer Welle 12 ist ein Rotorelement 14 angebracht, das sich mit der Welle 12 dreht. Das Rotorelement 14 ist als Radelement ausgebildet. An seinem Umfang ist als induktives Kopplungselement 18 ein Resonanzkreis mit einer Spulenstruktur und einem Kondensator angebracht, der im folgenden noch näher erläutert wird.

Ein Statorelement 20, das teilweise im Aufriß dargestellt ist, ist als Ringelement ausgebildet, daß das Rotorelement 14 umgreift. Ein zylinderförmiger Sensorbereich des Drehsensors ist entlang des Umfangs des Rotorelements 14 gebildet, wo sich das induktive Koppelelement 18 und ein Spulenschaltkreis 20 des Statorelements 20 mit geringem Abstand gegenüberliegen.

In Fig. 2 ist der Sensor 10 im Querschnitt gezeigt, allerdings ohne die Welle 12. Das Rotorelement 14 ist als Radelement aus Kunststoff ausgebildet. Darum erstreckt sich das Statorelement 20 als Ring, der ebenfalls aus Kunststoff gefertigt ist.

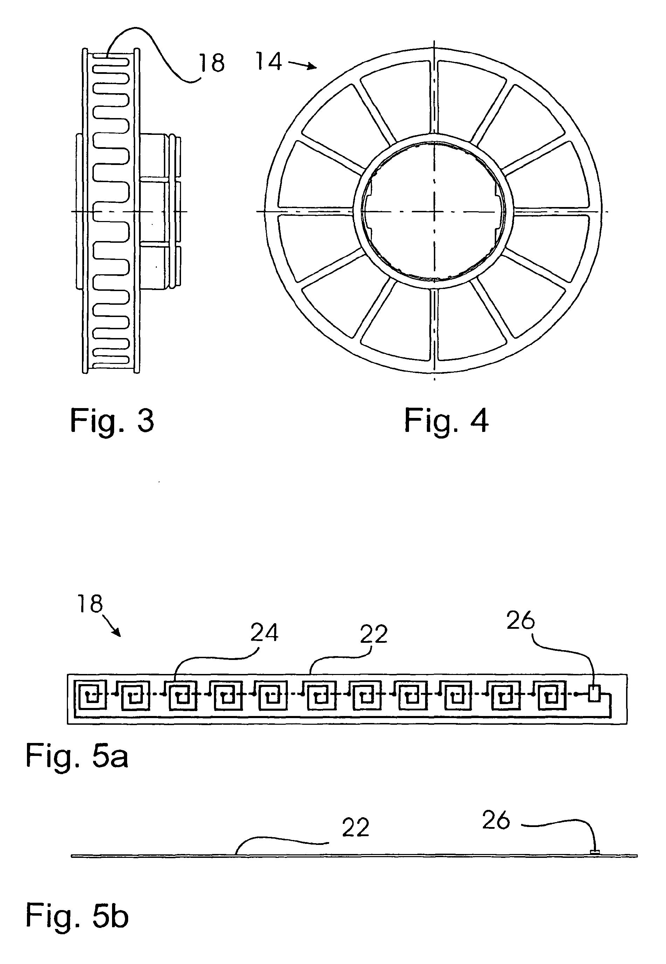

In den Fig. 3, 4 ist jeweils das Rotorelement 14 separat dargestellt. An dem am Umfang gebildeten Sensorbereich ist hierbei das induktive Kopplungselement 18 aufgenommen.

Dieses ist in Fig. 5a, Fig. 5b separat dargestellt. Es handelt sich um einen Streifen 22 aus einem flexiblen Trägermaterial. In der vorliegenden Ausführungsform wird hierbei das übliche Leiterplattenmaterial FR4 verwendet, allerdings in einer Dicke von lediglich 0,2mm (in Fig. 5b der Anschaulichkeit halber nicht maßstabsgerecht dargestellt). Auf dem Trägerstreifen 22 sind Leiterbahnen in einer Spulen-Struktur aufgebracht, wobei ein Resonanzkreis gebildet ist aus einer Spulenstruktur 24 und einem Kondensator 26.

Die Leiterbahnen sind hierbei mit der für die Herstellung von Leiterplatten üblichen Ätztechnik gefertigt. Der Kondensator 26 wird als SMD-Bauteil bestückt. Die Resonanzfrequenz liegt bevorzugt im Bereich von 1-10MHz, besonders bevorzugt zwischen 2 und 6 MHz. In der bevorzugten Ausführung ergibt sich bei einem Bauteilewert des Kondensators 26 von 1,5 nF eine Resonanzfrequenz des induktiven Kopplungselements 18 von 4 MHz.

Aufgrund der sehr geringen Dicke des Trägermaterials von lediglich 0,2mm ist der Streifen 22 flexibel. Er wird entlang des Sensorbereichs des Rotorelements 14 an diesem fixiert, so daß das induktive Kopplungselement 18 den gesamten Umfang des Rotorelements 14 umfaßt.

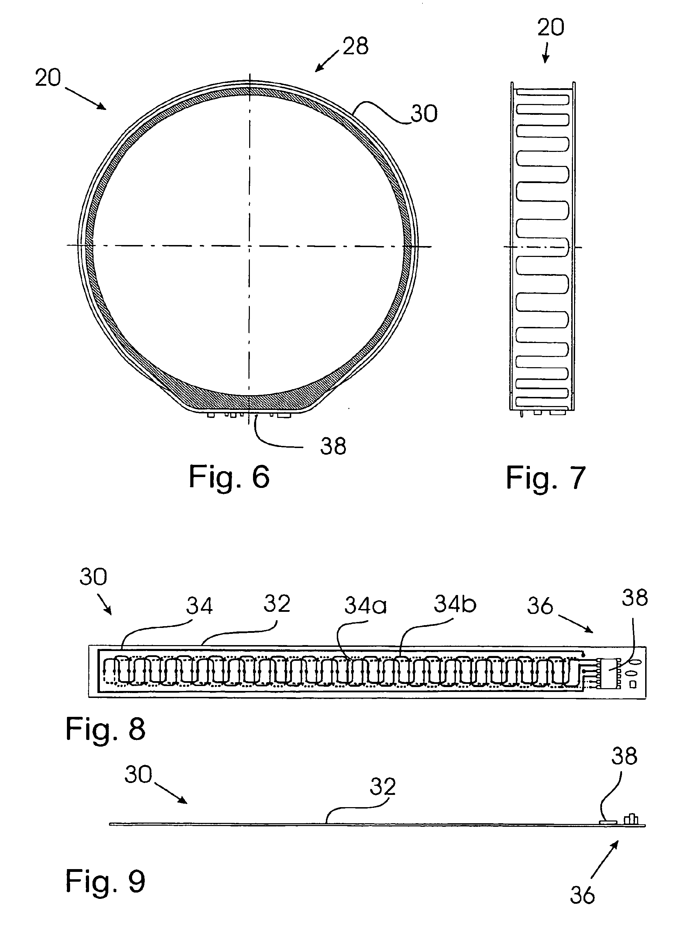

Die Fig. 6 und 7 zeigen das Statorelement 20. Dieses ist als Ringelement ausgebildet mit einem Sensorbereich 28 entlang des Ringumfangs. Außen an diesem Sensorbereich ist ein Spulenschaltkreis 30 angebracht, der den gesamten Umfang umfaßt. Hierbei wird der Streifen 22 in einem Radius von ca. 30 mm gebogen.

Der Spulenschaltkreis 30 ist in Fig. 8, 9 separat dargestellt. Es handelt sich um einen flexiblen Trägerstreifen 32, der in der vorliegenden Ausführungsform ebenfalls aus FR4-Epoxy-Material hergestellt ist. Auf dem Trägerstreifen ist eine Spulenstruktur mit einer als Schleife ausgebildeten Empfangsspule 34 und zwei räumlich in Quadratur angeordneten, mehrfach gekreuzten Erregerspulen 34a, 34b gebildet.

Der Schaltkreis 30 ist als mehrschichtige, im dargestellten Beispiel zweischichtige, doppelseitige Platine mit Durchkontaktierungen zwischen den Ebenen ausgebildet. Die hierdurch insgesamt gebildete Spulenstruktur entspricht der in WO-A-03/038379 im Detail beschriebenen Struktur von räumlich in Quadratur angeordneten Sendespulen. Diese Struktur ist in Fig. 8 nicht exakt dargestellt sondern nur symbolisch angedeutet.

Der Trägerstreifen 32 weist eine Dicke von lediglich 0,2mm auf, so daß der Spulenschaltkreis insgesamt flexibel ist. So kann der Trägerstreifen 32 in dem hier benötigten Durchmesser von ca. 30 mm gebogen werden. In der Seitenansicht von Fig. 9 ist hierbei die Dicke des Trägerstreifens 32 der Anschauung halber stärker und nicht maßstabsgerecht dargestellt. Wie weiter aus der Seitenansicht erkennbar ist, befindet sich an einem Ende des Spulenschaltkreises 30 ein Abschnitt 36, auf dem Bauteile einer Auswerteschaltung 38 aufgelötet sind, mit der die Spulen 34, 34a, 34b verbunden sind.

Die Auswerteschaltung 38 steuert die Erregerspulen 34a, 34b wie in der WO-A-03/038379 beschrieben mit modulierten, phasenverschobenen Signalen an und wertet die Phase des Signals in der Empfängerspule 34 aus. Hierbei sind die Spulen 34, 34a, 34b auf dem Streifen 32 so angeordnet, daß ohne das induktive Kopplungselement 18 keine oder nur eine relativ geringe Überkopplung des Signals aus den Erregerspulen 34a, 34b in die Empfängerspule 34 stattfindet. Bei Anordnung des induktiven Kopplungselements 18 in Reichweite des Spulenschaltkreises 30 bewirkt dieses eine positionsabhängige Überkopplung von den Erregerspulen 34a, 34b in die Empfängerspule 32, wobei sich aus der Phase des Signals in der Empfängerspule 34 die Position des induktiven Kopplungselements 18 ermitteln läßt.

Wie in Fig. 6 gezeigt, wird der Spulenschaltkreis 30 außen am ringförmigen Sensorbereich des Stators 20 angebracht, wobei der flexible Streifen 32 ringförmig, quer zu seiner Fläche, gebogen ist.

Der Spulenschaltkreis 30 ist außen am Sensorbereich 28 angeordnet und umfaßt einen Umfang des ringförmigen Statorelements 20.

Wie in Fig. 2 dargestellt liegen sich beim zusammengesetzten Sensor 10 das induktive Kopplungselement 18 und der Spulenschaltkreis 30 radial im Abstand gegenüber. Dazwischen ist der Trägerring des Statorelements 20 angeordnet, so daß sich ein geringer Abstand ergibt. Das vom Spulenschaltkreis 30 ausgehende elektromagnetische Feld durchdringt jedoch dieses Kunststoffmaterial und wirkt auf das induktive Kopplungselement. Mit der Auswerteschaltung 38 kann so die Drehposition des Rotorelements 14 gegenüber dem Statorelement 20 genau ermittelt werden.

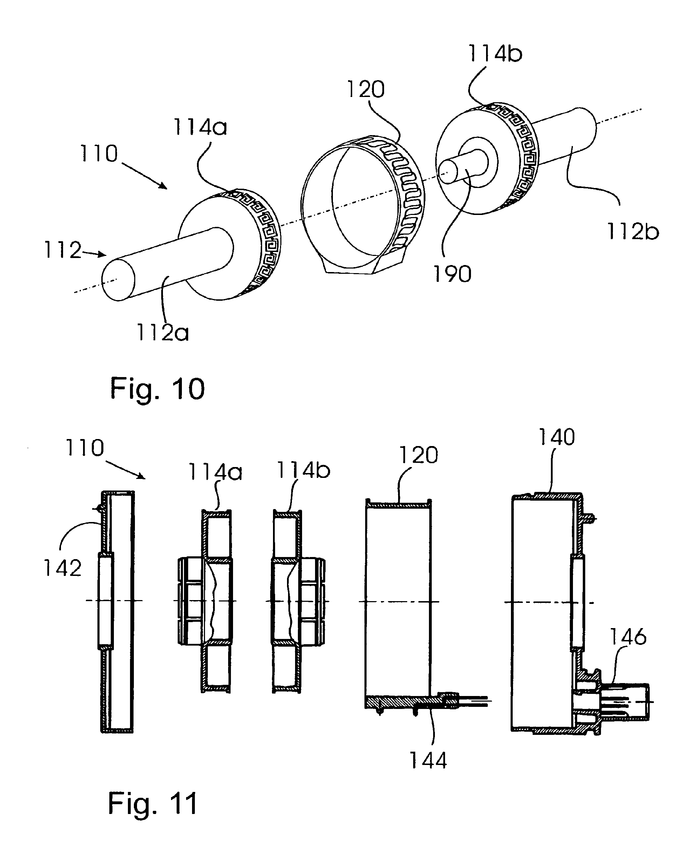

In Fig. 10 ist in einer perspektivischen Explosionsdarstellung eine zweite Ausführungsform eines Sensors 110 gezeigt. Während der Sensor 10 gemäß der ersten Ausführungsform als reiner Drehpositionssensor zur Ermittlung der Drehposition einer Welle 12 gegenüber einem Statorelement 20 ausgebildet war, dient der Sensor 110 gemäß der zweiten Ausführungsform außer zur Erfassung einer Drehposition auch zur Ermittlung einer Torsion zwischen zwei Wellenstücken 112a, 112b bzw. zur Ermittlung des durch eine aus den Wellenstücken 112a, 112b gebildete Welle 112 übertragenen Drehmoments.

An den Wellenstücken 112a, 112b sind jeweils Rotorelemente 114a, 114b angeordnet. Diese sind, wie bei der ersten Ausführungsform im Zusammenhang mit den Fig. 3-5 beschrieben, ausgebildet als Radelemente mit einem flexiblen induktiven Kopplungselement, so daß auf die dortigen Ausführungen verwiesen werden kann.

Die Rotorelemente 114a, 114b sind innerhalb eines Statorelements 120 drehbar. Das Statorelement 120 ist wie im Zusammenhang mit der ersten Ausführungsform im Hinblick auf die Fig. 6-9 beschrieben ausgebildet, so daß auch hier auf die dortigen Ausführungen verwiesen werden kann. Allerdings weist das Statorelement 120 eine größere axiale Länge auf, die zur Überdeckung der induktiven Kopplungselemente beider Rotorelemente 114a, 114b ausgelegt ist. Auf dem Statorelement ist eine einzige Spulenstruktur über die gesamte Breite angeordnet, die mit beiden Koppelelementen zusammenwirkt.

In der im Schnitt dargestellten Explosionsdarstellung in Fig. 11 ist der Aufbau des Sensors 110 mit seinen Einzelteilen sichtbar. Die Rotorelemente 114a, 114b werden im Inneren des ringförmigen Statorelements 120 angebracht, so daß sich die daran jeweils angebrachten induktiven Kopplungselemente und der am Statorelement 120 angebrachte Spulenschaltkreis radial benachbart gegenüberliegen, wobei der Spulenschaltkreis sich axial soweit erstreckt, daß er mit den beiden induktiven Kopplungselementen in Überdeckung steht.

Für den Sensor 110 ist ein Gehäuse 140 mit einem Gehäusedeckel 142 vorgesehen. An einem Anschlußbereich des Statorelements 120, an dem wie in Fig. 6 gezeigt die Auswerteschaltung 38 angeordnet ist, ist ein Steckeranschluß 144 zum elektrischen Anschluß der Auswerteschaltung an eine elektrische Stromversorgung und Signalauswertung vorgesehen. Hierfür ist am Gehäuse 140 ein Steckergehäuse 146 vorgesehen.

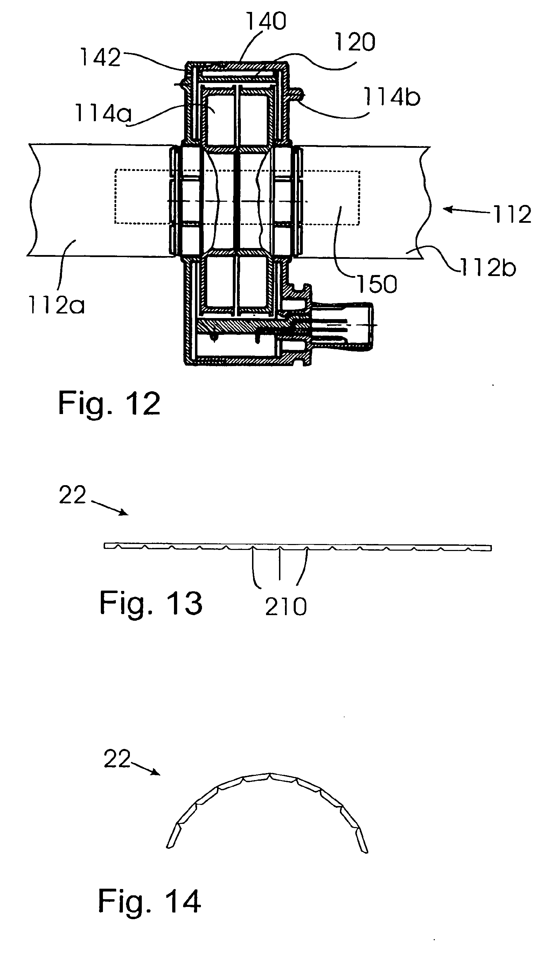

Fig. 12 zeigt den auf einer Welle 112 montierten Sensor 110. Die Welle 112 ist hierbei in die Wellenteile 112a, 112b unterteilt. Mit einem Torsionselement 150 sind die Wellenteile 112a, 112b unter Einfluß eines entsprechenden Torsionsmomentes verdrehbar aneinander angekoppelt. Die Verdrehung steht hierbei in direktem Zusammenhang mit dem von der Welle 112 übertragenen Drehmoment. Statt eines separaten Torsionselements 150 kann die Welle 112 auch durchgehend sein und über einen geschwächten Bereich verfügen, so daß sich die Wellenteile 112a, 112b unter Einfluß eines Drehmoments gegeneinander verdrehen.

Das Gehäuse 140 und der Gehäusedeckel 142 stehen ebenso wie das Statorelement 120 fest. Mit den Wellenstücken 112a, 112b drehen sich darin die Rotorelemente 114a, 114b. Bei der jeweiligen Drehbewegung bewegen sich die an den Rotorelementen 114a, 114b angeordneten induktiven Kopplungselemente im Abstand von dem Spulenschaltkreis an der dortigen Spulenstruktur vorbei.

Hierbei sind die induktiven Kopplungselemente so ausgebildet, daß ihr Kopplungsverhalten unterscheidbar ist. Dies wird erreicht, indem Resonanzkreise mit unterschiedlicher Resonanzfrequenz gebildet werden. Für eine effiziente Fertigung werden, wie in Fig. 5 gezeigt, Trägerstreifen mit identischer Spulenstruktur verwendet. Allerdings werden Kondensatoren mit unterschiedlichen Bauteilwerten eingesetzt, so daß die Resonanzkreise deutlich voneinander abweichende Resonanzfrequenzen aufweisen.

Die relative Position beider induktiven Kopplungselemente zum Spulenschaltkreis des Statorelements 120 kann mit ein und demselben Spulenschaltkreis ermittelt werden. Hierbei erfolgt jeweils zeitlich versetzt durch die Auswerteschaltung 38 eine Beaufschlagung der Erregerspulen einmal mit einem auf die Resonanzfrequenz des ersten induktiven Kopplungselementes und danach auf die Resonanzfrequenz des zweiten Kopplungselements abgestimmten Signal. So werden jeweils die Drehpositionen des ersten und zweiten Rotorelements 114a, 114b ermittelt. Je nach gewünschten Ausgangssignal am Steckeranschluß 144 können die individuellen Drehpositionen oder auch nur eine der beiden Drehpositionen übermittelt werden und/oder ein Differenzwert zwischen diesen Drehpositionen, der der Torsion der Welle 112 entspricht. Aus diesem Torsionswert kann auch der Wert eines übertragenen Drehmoments der Welle 112 ermittelt werden, wenn das Verhalten des Torsionselements 150 unter der jeweiligen Last bekannt ist. In der bevorzugten Ausführungsform erfolgt auch diese Berechnung in der Auswerteschaltung 38 und der entsprechende Wert wird über den Steckeranschluß 144 ausgegeben.

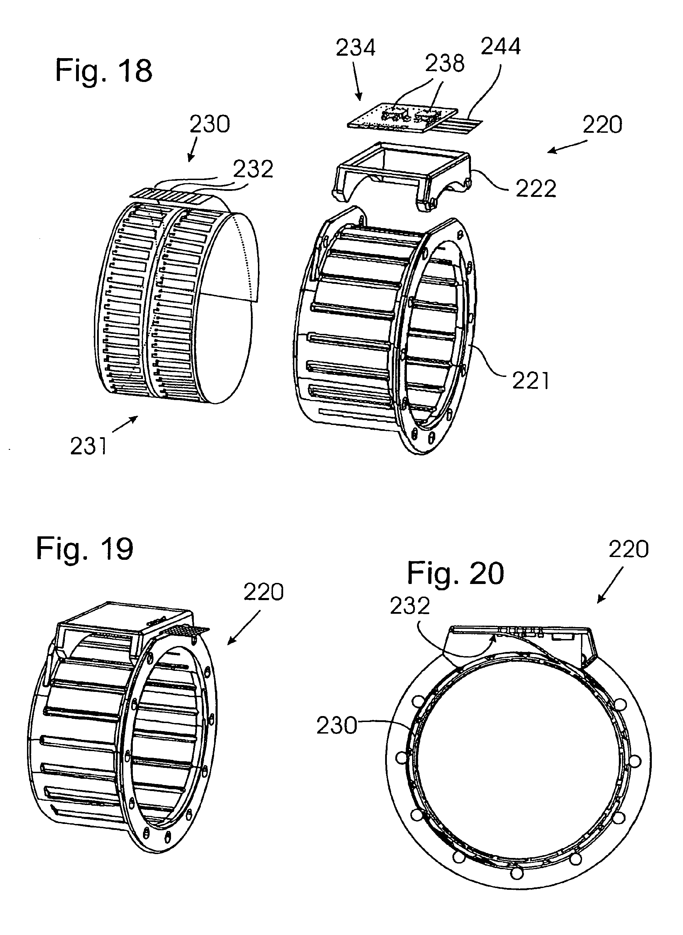

In den Fig. 18-22 ist eine dritte Ausführungsform eines induktiven Sensors gezeigt. Hierbei handelt es sich wie bei der zuvor beschriebenen zweiten Ausführungsform um einen Drehmomentsensor mit zwei Rotorelementen, die auf zwei Wellenstücke einer Welle aufgesetzt werden, so daß anhand der Verdrehung der Wellenstücke gegeneinander der Betrag des von der Welle übertragenen Drehmoments ermittelt werden kann.

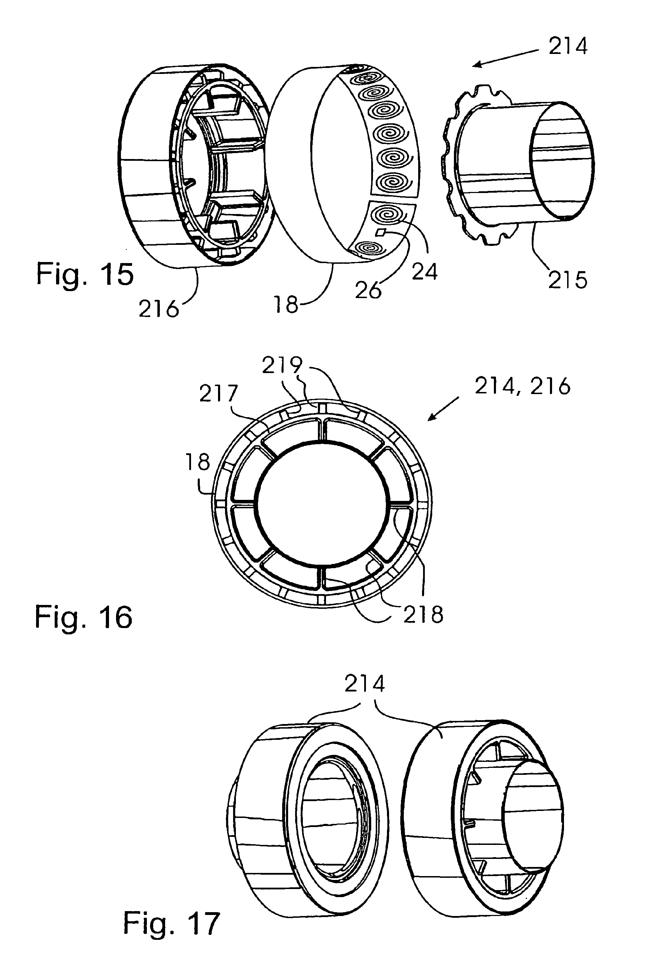

In den Fig. 15-17 sind Herstellung und Aufbau der Rotorelemente 214 gezeigt. Die Rotorelemente 214 sind jeweils als Radelemente ausgebildet. Eine Wellenhülse 215 aus Metall dient zur Verbindung mit der Welle. Die Wellenhülse 215 weist einen Flansch auf, über den sie mit einem Koppelelement-Haltering 216 verbunden ist. Der Haltering 216 ist aus Kunststoff hergestellt. Hierbei wird zunächst die Hülse 215 erstellt und dann in die Spritzform eingelegt, in der der Haltering 216 erstellt wird. So werden Hülse 215 und Haltering 216 durch Einspritzen verbunden. Alternativ könnte auch der Haltering 216 einstückig mit der Hülse 215 aus Kunststoff erstellt werden.

Als induktives Koppelelement 18 dient wie bei den vorangehenden Ausführungsformen ein flexibler Trägerstreifen mit Leiterbahnen in einer flachen Spulenstruktur 24 und einem diskreten SMD-Kondensator 26, die einen Resonanzkreis bilden.

Der Haltering 216 weist einen inneren Stützring 217 mit inneren Stützrippen 218 zur Verbindung mit der Hülse 215 auf. Zwischen dem Stützring 217 und der Außenwand des Rings 216 ist ein Abstandsbereich gebildet, in den äußere Rippen 219 hineinragen. In diesem Bereich wird der flexible Streifen des induktiven Koppelelements 18 eingelegt, so daß das Koppelelement zwischen den Stützrippen 219 und der Außenwand positioniert ist. Der flexible Streifen 18 ist dann ringförmig entlang des Umfangsbereiches des Rotorelements 214 angeordnet. In dieser Position wird der Streifen fixiert, indem der Zwischenbereich in einem Spritzgußverfahren mit Kunststoffmasse ausgefüllt und das Streifenelement 18 so eingebettet wird.

So wird das Rotorelement 214 auf kostengünstige Weise sehr exakt gefertigt. Für den Drehmomentsensor werden, wie in Fig. 17 gezeigt, zwei Rotorelemente 214 benötigt. Bei ansonsten identischem Aufbau weisen diese unterschiedlich bestückte Kondensatoren 26 auf, so daß der auf dem Streifen 18 gebildete Resonanzkreis unterschiedliche Resonanzfrequenzen aufweist.

In den Fig. 18-20 ist das Statorelement 220 dargestellt. Es setzt sich zusammen aus einem Ringträgerelement 221 und einem Schaltungshalteelement 222, die jeweils aus Kunststoff bestehen. Das Ringträgerelement 221 dient zur Aufnahme des Spulenschaltkreises 230. Der Spulenschaltkreis 230 ist wie bei den vorbeschriebenen Ausführungsformen als flexibler Trägerstreifen hergestellt. Es handelt sich um ein FR4-Epoxydmaterial einer Dicke von 0,25 mm, auf der doppellagig mit Durchkontaktierungen eine Spulenstruktur 231 aufgebracht ist. Hierbei handelt es sich um eine doppelte Spulenstruktur, wobei in zwei Ringen jeweils zwei räumlich in Quadratur angeordnete Sendespulen und umlaufend darum jeweils eine Empfangsspule angeordnet sind. Die insgesamt gebildete Spulenstruktur entspricht wiederum der in WO-A-03/038379 beschriebenen Struktur, wobei sämtliche Spulen nebeneinander doppelt vorhanden sind.

Die Enden der auf dem Streifen 230 gebildeten Spulen enden in Kontaktflächen 232 an einem Ende des Streifens.

Das Statorelement 220 wird, wie in Fig. 18 gezeigt, zusammengesetzt. Der Haltering 221 wird im Spritzgußverfahren hergestellt, wobei der Spulenschaltkreis 230 in die Spritzform eingelegt und so in den Haltering 221 eingeformt wird. Alternativ ist es auch möglich, den Haltering 221 mit einem ringförmigen Zwischenraum zu erstellen und in den Zwischenraum dann den zu einem Ring gerollten Spulenschaltkreis einzustecken und geeignet zu fixieren. Das Halteelement 222 wird am Haltering 221 eingerastet. Bei Bedarf kann es verklebt oder durch Warmverformung fixiert werden. Mit einem Ende, das mit Kontaktflächen 232 versehen ist, ragt der Spulenschaltkreis 230 aus dem Haltering 221 heraus und ist bis zur Oberseite des Halteelements 222 geführt. Dort wird nun eine Leiterplatte 234 positioniert, auf der zwei als integrierte Schaltungen vorgesehene Auswerteschaltungen 38 sowie zugehörige Bauelemente als Schutzbeschaltung aufgebracht sind. Die Kontaktflächen 232 des Spulenschaltkreises 230 werden mit der bestückten Unterseite der Leiterplatte 234 verbunden, so daß die darauf gebildeten Spulen an die integrierten Schaltungen 238 angeschlossen sind. Über diese Schaltungen werden die Anregungssignale der Sendespulen vorgegeben und die in den Empfangsspulen empfangenen Signale ausgewertet. Wie die Spulenschaltkreise sind auch die Auswerteschaltungen doppelt vorhanden, so daß unabhängig die Winkelposition von zwei induktiven Koppelelementen ermittelt werden kann. Die Anregung der Sendespulen erfolgt hierbei auf den jeweiligen, voneinander abweichenden Resonanzfrequenzen der zugehörigen Rotorelemente.

Das so gebildete Statorelement (Fig. 19) ist ein Ringelement. Es ist sehr kostengünstig, und dennoch sehr exakt, aus Kunststoff gefertigt.

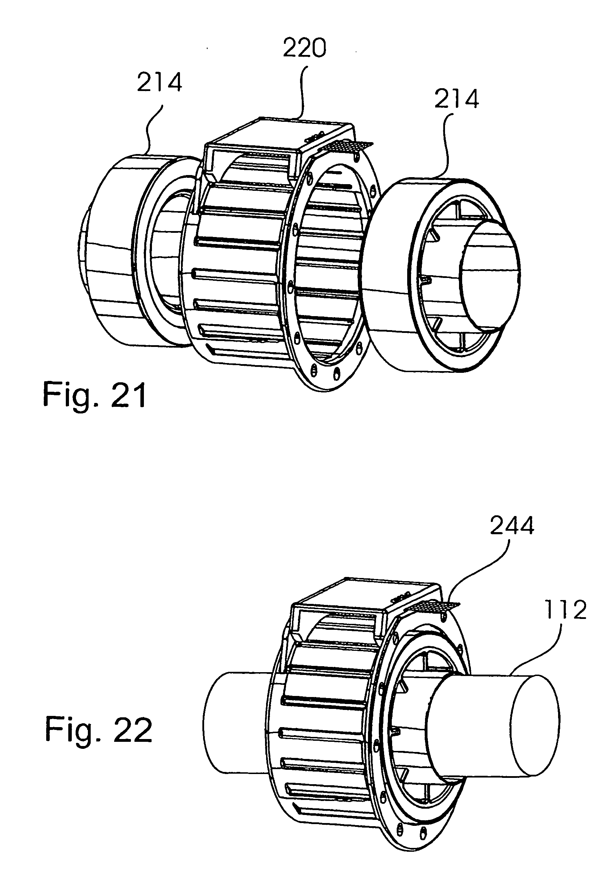

Wie in Fig. 21, Fig. 22 gezeigt, werden Rotor- und Statorelemente 214, 220 zu einem Drehmomentsensor auf einer Welle 12 zusammengebaut. Die Drehposition der beiden Wellenstücke, auf denen die Rotorelemente 214 aufgesetzt sind, werden in den Auswerteschaltungen erkannt. Am Steckeranschluß 244 können diese Drehpositionen abgefragt werden. Aus der Differenz der Drehpositionen kann das Drehmoment in der Welle 12 ermittelt werden.

Zu den oben beschriebenen Ausführungen sind eine Anzahl von Abwandlungen denkbar.

So können die flexiblen Trägerstreifen 22, 32 für das induktive Kopplungselement und den Spulenschaltkreis aus verschiedenen Materialien und mit verschiedenen Verfahren hergestellt werden. Maßgeblich ist allein, daß die fertigen Elemente flexibel sind, so daß sie quer zu ihrer Fläche zu einem Ring oder mindestens Teilring gebogen werden können. Auf diese Weise kann besonders einfach und kostengünstig eine räumliche Spulenstruktur erzeugt werden.

Eine alternative Ausführungsform eines flexiblen Trägerstreifens 22 zeigen Fig. 13, 14. Hierbei handelt es sich um einen im Grunde starren Träger, bspw. eine FR4-Platte von 1 mm Stärke, bei der in Querrichtung eine Anzahl voneinander beabstandeter Nuten eingefräst sind, so dass der streifenförmige Träger 22 an den Nuten 210 entsprechend geschwächt ist. Obwohl die Segmente zwischen den Nuten selbst starr sind, ist der gesamte Träger nun flexibel und kann wie in Fig. 14 gezeigt zu einem Teilkreis gebogen werden.

Als Trägermaterial kommen verschiedene Dicken eines Epoxydharz-Materials, bspw. FR4, in Frage. Bevorzugt wird eine Dicke von o,2mm, die erforderliche Flexibilität wird aber auch bei hiervon abweichenden Werten von bis zu 0,5mm, bevorzugt bis zu 0,3 mm erreicht. Maßgeblich ist, dass der Trägerstreifen so flexibel ist, dass er im benötigten Durchmesser gekrümmt werden kann. Hierbei ist der jeweilige Durchmesser vom jeweiligen Einsatz des Sensors abhängig, bspw. vom Wellendurchmesser. Bevorzugt werden Krümmungsradien von bspw. 1-10 cm.

Darüber hinaus kommen andere flexible Kunststoffmaterialien in Frage, darunter bspw. Carbon-Trägerfolie oder Capton-Folie.

Für das Aufbringen der Spulenstrukturen können einerseits aus der Leiterplattenherstellung bekannte Ätzverfahren verwendet werden. Andererseits sind Druck- oder Spritzverfahren denkbar, ebenso wie galvanische Aufbringungsverfahren. Für die Herstellung von Durchkontaktierungen können herkömmliche Bohrungen, Laser-Löcher oder andere Techniken verwendet werden.

Die Herstellung der flexiblen Elemente kann auch mit Hilfe von Drähten erfolgen, die auf Folien aufgeklebt oder zwischen Folien laminiert werden.

## Patentansprüche

1. Induktiver Drehmomentsensor mit
- mindestens zwei Rotorelementen (114a, 114b, 214), die axial im Abstand an Wellenstücken (112a, 112b) einer Welle (112) angebracht sind,
- wobei die Rotorelemente (114a, 114b, 214) gegenüber eine Statorelement (120, 220) drehbar sind, **dadurch gekennzeichnet daß**,
- am Umfang der Rotorelemente (114a, 114b, 214) axial nebeneinander jeweils ein induktives Kopplungselement (18) vorgesehen ist, das als Resonanzkreis mit einer Kapazität (26) und einer Induktivität (24) ausgebildet ist,
- wobei am Statorelement (120, 220) ein Sensorbereich gebildet ist, in dem sich ein Spulenschaltkreis (30, 230) mit mindestens zwei Spulen (34a, 34b, 34) entlang des Sensorbereiches erstreckt, so daß sich bei Drehung der Rotorelemente (114a, 114b, 214) die induktiven Kopplungselemente (18) entlang der Spulen (34a, 34b, 34) bewegen und eine positionsabhängige induktive Kopplung zwischen den Spulen (34, 34a, 34b) bewirken,
- wobei der Spulenschaltkreis (30, 230) so angeordnet ist, daß er mit den induktiven Kopplungselementen (18) beider Rotorelemente (114a, 114b, 214) in Überdeckung ist,
- wobei die induktiven Kopplungselemente (18) voneinander verschiedene Resonanzfrequenzen aufweisen.

2. Sensor nach Anspruch 1, bei dem
- der Spulenschaltkreis (30, 230) ein flexibles Trägermaterial (32) aufweist, auf dem die Spulen (34, 34a, 34b) als Leiter gebildet sind, und wobei das flexible Trägermaterial (32) gekrümmt entlang des Sensorbereichs (28) verläuft.

3. Sensor nach Anspruch 2, bei dem
- das Statorelement ein feststehendes Ringelement (20, 220) ist, das mindestens teilweise radial um die Rotorelemente (114a, 114b, 214) herum angeordnet ist, wobei die Sensorbereiche (28) mindestens teilweise Zylinderflächen sind.

4. Sensor nach Anspruch 3, bei dem
- das Statorelement (30, 230) einen Aufnahmebereich (28) zur Aufnahme des flexiblen Trägermaterials (32) aufweist.

5. Sensor nach einem der vorangehenden Ansprüche, bei dem
- die induktiven Kopplungselemente (18) jeweils Spulen aufweisen, die auf einem flexiblen Trägermaterial (22) als Leiter gebildet sind, wobei das flexible Trägermaterial (22) gekrümmt entlang des Sensorbereiches verläuft.

6. Sensor nach einem der vorangehenden Ansprüche, bei dem
- das flexible Trägermaterial (22, 32) mindestens teilringförmig gekrümmt ist.

7. Sensor nach einem der Ansprüche 2-6, bei dem
- das flexible Trägermaterial (22, 32) in Kunststoffmaterial eingebettet ist.

8. Sensor nach einem der vorangehenden Ansprüche, bei dem
- das Statorelement (120, 220) ringförmig ausgebildet ist,
- und die Rotorelemente (114a, 114b, 214) ebenfalls ringförmig ausgebildet und innerhalb des durch das Statorelement (120, 220) gebildeten Rings angeordnet sind.

9. Sensor nach einem der vorangehenden Ansprüche, bei dem
- am Statorelement (20, 120, 220) eine an den Spulenschaltkreis (30) angeschlossene Auswerteschaltung (38) vorgesehen ist, die ein Erregersignal in mindestens einer der Spulen (34a, 34b) erzeugt und ein Empfängersignal von mindestens einer weiteren Spule (34) empfängt und auswertet,
- wobei die Auswerteschaltung (38) aus dem Empfängersignal einen Wert für die Drehposition mindestens eines Rotorelements (114a, 114b, 214) ermittelt.

10. Sensor nach Anspruch 9, bei dem
- die Auswerteschaltung (38) aus dem Empfängersignal einen Wert für die Drehposition des ersten und des zweiten Rotorelements (114a, 114b, 214) ermittelt.

11. Sensor nach einem der Ansprüche 9,10 bei dem
- am Statorelement (20, 120) ein Steckeranschluß (144) für die Auswerteschaltung (38) vorgesehen ist.

12. Sensor nach einem der vorangehenden Ansprüche, bei dem
- ein Gehäuse (140, 142) vorgesehen ist, das die Rotorelemente (114a, 114b) und das Statorelement (120, 220) im wesentlichen umgibt.

13. Sensor nach einem der vorangehenden Ansprüche, bei dem
- die Rotorelemente (114a, 114b, 214) jeweils an fluchtenden Wellenstücken (112a, 112b) angeordnet sind,
- wobei die Wellenstücke (112a, 112b) elastisch gegeneinander verdrehbar verbunden sind.

14. Sensor nach Anspruch 13, bei dem
- in der Auswerteschaltung (38) die Drehposition des ersten und des zweiten Rotorelements (114a, 114b) ermittelt wird,
- und aus der Differenz der Drehpositionen ein Wert für ein Drehmoment errechnet wird.

15. Sensor nach einem der vorangehenden Ansprüche, bei dem
- das Koppelelement eine flächige Leiterstruktur aufweist, die auf einem flexiblen Trägermaterial aufgebracht ist,
- wobei das flexible Trägermaterial gekrümmt um das Rotorelement herum verläuft.

## Claims

1. Inductive torque senor with:
- at least two rotor elements (114a, 114b, 214) being disposed axially and spaced apart on shaft components (112a, 112b) of a shaft (112),
- the rotor elements (114a, 114b, 214) being rotatable with respect to a stator element (120, 220) **characterized in that**
- an inductive coupling element (18) disposed around the circumference of each rotor element (114a, 114b, 214) axially adjacent to each other, the inductive coupling element being formed as a resonant circuit with a capacity (26) and an inductivity (24),
- wherein at the stator element (120, 220) a sensor area is formed in which an inductive circuit (30, 230) with at least two inductors (34a, 34b, 34) is disposed along the sensor area , such that when the rotor elements (114a, 114b, 214) rotate, the inductive coupling elements (18) move along the inductors (34a, 34b, 34) and cause a position-dependent inductive coupling between the inductors (34, 34a, 34b),
- wherein the inductive circuit (30, 230) is so positioned that it overlaps the inductive coupling elements (18) of both rotor elements (114a, 114b, 214),
- wherein the inductive coupling elements (18) possess differing resonant frequencies.

2. Sensor according to claim 1, wherein
- the inductive circuit (30, 230) includes a flexible carrier material (32) on which the inductors (34, 34a, 34b) are formed as conductors and wherein the flexible carrier material (32) is bent and extends along the sensor area (28).

3. Sensor according to claim 2, wherein
- the stator element is a fixed ring element (20, 220) that is at least partially radially positioned about the rotor element (114a, 114b, 214), and wherein the sensor areas (28) are at least partially cylindrical surfaces.

4. Sensor according to claim 3, wherein
- the stator element (30, 230) includes a receiver area (28) to receive the flexible carrier material (32).

5. Sensor according to one of the preceding claims, wherein
- each of the inductive coupling elements (18) includes inductors that are formed on a flexible carrier material (22) as conductors, whereby the flexible carrier material (22) is bent and extends along the sensor area.

6. Sensor according to one of the preceding claims, wherein
- the flexible carrier material (22, 32) is bent into at least a partially ring-shaped form.

7. Sensor according to one of claims 2 - 6, wherein
- the flexible carrier material (22, 32) is embedded in plastic material.

8. Sensor according to one of the preceding claims, wherein
- the stator element (120, 220) is ring-shaped,
- and the rotor elements (114a, 114b, 214) are also ring-shaped and positioned within the ring formed by the stator element (120, 220).

9. Sensor according to one of the preceding claims, wherein
- an evaluation circuit (38) is provided on the stator element (20, 120, 220) connected to the inductive circuit (30) that creates an exciter signal in at least one of the inductors (34a, 34b) and receives and evaluates a receiver signal from at least one additional coil (34),
- wherein the evaluation circuit (38) determines a value from the receiver signal for the rotational position of at least one of the rotor elements (114a, 114b, 214).

10. Sensor according to claim 9, wherein
- the evaluation circuit (38) determines a value for the rotational position of the first and of the second rotor element (114a, 11b 214) from the receiver signal.

11. Sensor according to one of claims 9, 10, wherein
- a plug connector (144) is provided on the stator element (20, 120) for the evaluation circuit (38).

12. Sensor according to one of the preceding claims, wherein
- a housing (140, 142) is provided that substantially surrounds the rotor elements (114a, 114b) and the stator element (120, 220).

13. Sensor according to one of the preceding claims, wherein
- each of the rotor elements (114a, 114b, 214) is mounted on flying shaft components (112a, 112b),
- wherein the shaft components (112a, 112b) are connected together elastically so that they may be rotated against each other.

14. Sensor according to claim 13, wherein
- the rotational position of the first and of the second rotor element (114a, 114b) is determined in the evaluation circuit (38),
- and wherein a value for the torque is calculated from the differential in rotational positions.

15. Sensor according to one of the preceding claims, wherein
- the coupling element includes a flat conductor structure that is mounted on flexible carrier material,
- wherein the flexible carrier material is crimped about the rotor element.

## Revendications

1. Capteur inductif de couple de rotation avec
- au moins deux éléments de rotor (114a, 114b, 214) qui sont fixés axialement à un écart sur des parties de broche (112a, 112b) d'une broche (112),
- les éléments de rotor (114a, 114b, 214) étant rotatifs par rapport à un élément de stator (120, 220),
**caractérisé en ce**
- **qu**'il est prévu respectivement un élément de couplage inductif (18) à la périphérie des éléments de rotor (114a, 114b, 214) axialement l'un à côté de l'autre, élément de couplage qui est configuré comme circuit de résonance avec une capacité (26) et une résistance inductive (24),
- une zone de capteur étant formée sur l'élément de stator (120, 220), zone dans laquelle s'étend un circuit de commutation de bobines (30, 230) avec au moins deux bobines (34a, 34b, 34) le long de la zone de capteur si bien que, lors de la rotation des éléments de rotor (114a, 114b, 214), les éléments de couplage inductifs (18) se déplacent le long des bobines (34a, 34b, 34) et provoquent un couplage inductif dépendant de la position entre les bobines (34, 34a, 34b),
- le circuit de commutation de bobines (30, 230) étant placé tel qu'il est en chevauchement avec les éléments de couplage inductifs (18) des deux éléments de rotor (114a, 114b, 214),
- les éléments de couplage inductifs (18) présentant des fréquences de résonance différentes l'une de l'autre.

2. Capteur selon la revendication 1 pour lequel
- le circuit de commutation de bobines (30, 230) présente un matériau de support flexible (32) sur lequel les bobines (34, 34a, 34b) sont formées comme des conducteurs et le matériau de support flexible (32) étant courbé le long de la zone de capteur (28).

3. Capteur selon la revendication 2 pour lequel
- l'élément de stator est un élément annulaire fixe (20, 220) qui est placé au moins partiellement radialement autour des éléments de rotor (114a, 114b, 214), les zones de capteur (28) étant au moins partiellement des surfaces de cylindre.

4. Capteur selon la revendication 3 pour lequel
- l'élément de stator (30, 230) présente une zone de logement (28) pour recevoir le matériau de support flexible (32).

5. Capteur selon l'une des revendications précédentes pour lequel
- les éléments de couplage inductifs (18) présentent respectivement des bobines qui sont formées comme des conducteurs sur un matériau de support flexible (22), le matériau de support flexible (22) étant courbé le long de la zone de capteur.

6. Capteur selon l'une des revendications précédentes pour lequel
- le matériau de support flexible (22, 32) est courbé au moins en forme d'anneau partiel.

7. Capteur selon l'une des revendications 2 à 6 pour lequel
- le matériau de support flexible (22, 32) est encastré dans un matériau synthétique.

8. Capteur selon l'une des revendications précédentes pour lequel
- l'élément de stator (120, 220) est configuré en forme d'anneau
- et les éléments de rotor (114a, 114b, 214) sont également configurés en forme d'anneau et sont placés à l'intérieur de l'anneau formé par l'élément de stator (120, 220).

9. Capteur selon l'une des revendications précédentes pour lequel
- il est prévu sur l'élément de stator (20, 120, 220) un circuit d'évaluation (38) branché au circuit de commutation de bobines (30), circuit d'évaluation qui produit un signal d'excitation dans au moins l'une des bobines (34a, 34b) et reçoit et évalue un signal de réception d'au moins une autre bobine (34),
- le circuit d'évaluation (38) déterminant à partir du signal de réception une valeur pour la position de rotation d'au moins un élément de rotor (114a, 114b, 214).

10. Capteur selon la revendication 9 pour lequel
- le circuit d'évaluation (38) détermine à partir du signal de réception une valeur pour la position de rotation du premier et du second élément de rotor (114a, 114b, 214).

11. Capteur selon l'une des revendications 9, 10 pour lequel
- il est prévu sur l'élément de stator (20, 120) un raccord de connecteur (144) pour le circuit d'évaluation ( 38).

12. Capteur selon l'une des revendications précédentes pour lequel
- il est prévu un bâti (140, 142) qui entoure substantiellement les éléments de rotor (114a, 114b) et l'élément de stator (120, 220).

13. Capteur selon l'une des revendications précédentes pour lequel
- les éléments de rotor (114a, 114b, 214) sont placés respectivement sur des parties de broche en alignement (112a, 112b),
- les parties de broche (112a, 112b) étant reliées élastiquement en pouvant être tordues l'une contre l'autre.

14. Capteur selon la revendication 13 pour lequel
- la position de rotation du premier et du second élément de rotor (114a, 114b) est déterminée dans le circuit d'évaluation (38)
- et une valeur pour un couple de rotation est calculée à partir de la différence des positions de rotation.

15. Capteur selon l'une des revendications précédentes pour lequel
- l'élément de couplage présente une structure de conducteur en surface qui est appliquée sur un matériau de support flexible,
- le matériau de support flexible étant courbé autour de l'élément de rotor.
